# EUROPÄISCHE PATENTSCHRIFT

(11) **EP 1 921 717 B1**
(45) Veröffentlichungstag und Bekanntmachung des Hinweises auf die Patenterteilung: **31.08.2011**
(21) Anmeldenummer: 07116848.8
(22) Anmeldetag: 20.09.2007
(51) Int. Cl.: H01R 13/46

(54) **Montageset für eine Elektrodose**
Assembly set for an electrical socket
Ensemble de montage pour une boîte électrique

(30) Priorität: 04.10.2006 DE 102006047282; 06.02.2007 DE 102007006618; 13.06.2007 DE 102007027861
(43) Veröffentlichungstag der Anmeldung: 14.05.2008
(73) Patentinhaber: Günther Spelsberg GmbH & Co. KG, 58579 Schalksmühle (DE); Reis GmbH & Co. KG Maschinenfabrik, 63785 Obernburg (DE)
(72) Erfinder: Spelsberg, Holger, 58579, Schalksmühle (DE); Quardt, Dirk, 58638, Iserlohn (DE); Vrieling, Alfred, 58513, Lüdenscheid (DE)
(74) Vertreter: Michalski Hüttermann & Partner Patentanwälte

(56) Entgegenhaltungen:
- WO-A-00/30216
- DE-B3- 10 334 935
- DE-U1- 20 311 184
- US-B1- 6 582 249

## Beschreibung

Die Erfindung betrifft ein Montageset für eine Elektrodose, insbesondere für eine Anschlußdose für ein Solarzellenmodul, mit einem Gehäuse, wenigstens einem dem Gehäuse zugeführten Kabel und einem an dem Gehäuse befestigten Kabelträger, von dem das Kabel getragen wird.

Anschlußdosen zum elektrischen Anschluß von Solarzellenmodulen sind aus der Praxis gut bekannt. Im allgemeinen werden die Solarzellenmodule einerseits und die Anschlußdosen für die Solarzellenmodule andererseits von verschiedenen Herstellern geliefert. Damit ergibt sich die Situation, daß Anschlußdosen für Solarzellenmodule in einer derartigen Form geliefert und bereitgestellt werden müssen, daß sie an den Solarzellenmodulen installiert werden können. Häufig weisen die Anschlußdosen für die Solarzellenmodule bereits Kabel, wie Anschlußkabel auf, die damit schon bei der Herstellung der Anschlußdose "elektrisch endgeprüft" werden können.

Um nun den Transport von bereits mit Kabeln versehenen Anschlußdosen, die an Solarzellenmodulen installiert werden sollen, zu erleichtern, ist es aus der Praxis bereits bekannt, an dem Gehäuse der Anschlußdose einen Kabelträger vorzusehen, an dem die Kabel und gegebenenfalls an den Kabeln befestigte Stecker gehalten sind. Diese Lösung stellt bereits eine Verbesserung der Handhabbarkeit von Anschlußdosen beim Transport und ihrer Installation an Solarzellenmodulen dar. Jedoch gestaltet sich die Installation immer noch aufwendig, so daß der Wunsch besteht, die Handhabbarkeit solcher Anschlußdosen für Solarzellenmodule weiter zu verbessern.

Anschlusseinrichtung für ein Solarstrommodul sind z.B. aus DE10334935B3, DE20311184U1, US-6582249B1 und WO 00/30216 bekannt.

Damit ist es die Aufgabe der Erfindung, ein derartiges Montageset für eine Elektrodose, insbesondere für eine Anschlußdose für Solarzellenmodule, bereitzustellen, das eine weiter verbesserte und effiziente Installation erlaubt.

Ausgehend von dem eingangs beschriebenen Montageset ist diese Aufgabe dadurch gelöst, daß das Montageset einen Deckel zum Verschließen des Gehäuses aufweist.

Insbesondere zum Schutz gegen Witterungseinflüsse, wie Staub und Feuchtigkeit, weisen Anschlußdosen für Solarzellenmodule im allgemeinen immer einen Deckel zum Verschließen des Gehäuses auf. Erfindungsgemäß weist das Montageset nun nicht nur das Gehäuse, ein dem Gehäuse zugeführtes Kabel und einen Kabelträger zum Tragen des Kabels auf, sondern zusätzlich auch den Deckel zum Verschließen des Gehäuses, so daß der Deckel zur Installation der Anschlußdose nicht mehr in einem separaten Gebinde angeliefert werden muß. Damit ergibt sich also der wesentliche Vorteil, daß der bisher erforderliche separate Transport des Deckels entfällt, was die Montageabläufe wesentlich erleichtert.

Dabei kann der Deckel grundsätzlich auf verschiedene Weisen angeordnet sein. Gemäß einer bevorzugten Weiterbildung der Erfindung ist jedoch vorgesehen, daß der Deckel derart angeordnet ist, daß der Innenraum des Gehäuses zugänglich ist. Auf diese Weise können innerhalb des Gehäuses Installationsarbeiten zum elektrischen Anschluß des Solarzellenmoduls durchgeführt werden, bevor die Elektrodose mit Hilfe des Deckels verschlossen wird. Dabei kann es ausreichend sein, daß der Innenraum des Gehäuses nur teilweise zugänglich ist. Gemäß einer bevorzugten Weiterbildung der Erfindung ist jedoch vorgesehen, daß die Anordnung des Deckels es erlaubt, auf den gesamten Innenraum des Gehäuses zuzugreifen.

Grundsätzlich kann der Kabelträger mit dem Gehäuse einstückig ausgebildet sein. Gemäß einer bevorzugten Weiterbildung der Erfindung ist jedoch vorgesehen, daß der Kabelträger als separates Teil an dem Gehäuse angebracht ist. Dabei ist vorzugsweise auch vorgesehen, daß der Kabelträger von dem Gehäuse lösbar ist.

Dabei kann der Kabelträger direkt an dem Gehäuse befestigt sein. Gemäß einer bevorzugten Weiterbildung der Erfindung ist jedoch ein Verbindungsteil vorgesehen, mit dem der Kabelträger an dem Gehäuse befestigt ist. Gemäß einer bevorzugten Weiterbildung der Erfindung ist dabei ferner vorgesehen, daß das Verbindungsteil mit dem Kabelträger und dem Gehäuse lösbar verbunden ist. Dies erlaubt es z. B. nach der Installation auf einem Solarzellenmodul das Verbindungsteil, das dann gegebenenfalls nicht mehr benötigt wird, zu entfernen. Dabei kann das Verbindungsteil auf verschiedene Weisen mit dem Gehäuse und dem Kabelträger verbunden sein. Gemäß einer bevorzugten Weiterbildung der Erfindung ist jedoch vorgesehen, daß das Verbindungsteil jeweils mittels einer Verrastung am Gehäuse und am Kabelträger befestigt ist. Auf diese Weise ist das Verbindungsteil einfach entfernbar, insbesondere auch im Rahmen eines automatisierten Installationsvorgangs.

Grundsätzlich kann das Verbindungsteil auf unterschiedliche Arten entfernbar sein. Gemäß einer bevorzugten Weiterbildung der Erfindung ist jedoch vorgesehen, daß das Verbindungsteil von der mit dem Deckel verschließbaren Seite des Gehäuses her entfernbar ist. Auf diese Weise kann z. B. vorgesehen werden, daß bei der Installation zuerst der Deckel auf das Gehäuse aufgesetzt und dann mit demselben Werkzeug, wie einem Roboterarm, das Verbindungsteil entfernt wird.

Gemäß einer bevorzugten Weiterbildung der Erfindung ist vorgesehen, daß das Kabel mittels separater, an dem Kabelträger vorgesehener Kabelfixierungen fixiert ist. Gemäß einer anderen bevorzugten Weiterbildung der Erfindung ist vorgesehen, daß der Deckel derart in dem Kabelträger befestigt ist, daß damit eine Fixierung des Kabels erzielt wird. Mit anderen Worten bildet der Deckel somit die Einrichtung, mit der das Kabel am Kabelträger fixiert ist, wobei zwar zusätzliche Einrichtungen zur Fixierung des Kabels vorgesehen sein können, nicht aber vorgesehen sein müssen. Damit ist der weitere Vorteil verbunden, daß eine derartige Ausgestaltung und Anordnung des Kabelträgers, des Kabels und des Deckels vorgesehen sein kann, daß das Kabel solange fixiert ist, wie der Deckel an dem Kabelträger befestigt ist und bei Abnahme des Deckels vom Kabelträger frei wird, so daß es ohne weiteres vom Kabelträger entfernt werden kann, insbesondere ohne weitere Fixiereinrichtungen zu lösen.

Gemäß einer bevorzugten Weiterbildung der Erfindung ist dabei vorgesehen, daß der Deckel wenigstens einen Teilbereich des Kabels bedeckt. Ist an dem Kabel ein Stecker vorgesehen, so bedeckt der Deckel gemäß seiner bevorzugten Weiterbildung der Erfindung wenigstens einen Teilbereich des Steckers, vorzugsweise jedoch den gesamten Stecker. Auf diese Weise wird ein mechanischer Schutz des Steckers erzielt.

Grundsätzlich kann der Kabelträger in unterschiedlichen Formen ausgebildet sein. Gemäß einer bevorzugten Weiterbildung der Erfindung ist jedoch vorgesehen, daß der Kabelträger eine Trageebene zum Tragen des Kabels aufweist und das Kabel derart von dem Kabelträger getragen wird, daß es in allen seinen Bereichen parallel zur Trageebene verläuft. Konkret bedeutet dies, daß das Kabel zwar seitlich über den Kabelträger überstehen kann, jedoch nicht von diesem herunterhängt, so daß eine aufgeräumte Anordnung des Kabels erzielt wird, die eine sichere Aufbewahrung und einen sicheren Transport des gesamten Montagesets gewährleistet.

Gemäß einer bevorzugten Weiterbildung der Erfindung ist ferner vorgesehen, daß das Kabel in allen seinen Bereichen von dem Kabelträger getragen wird. Dabei ist es nicht erforderlich, daß der Kabelträger ausschließlich eine Trageebene zum Tragen des Kabels aufweist. Vielmehr ist dabei jedoch vorgesehen, daß das Kabel seitlich nicht über den Kabelträger übersteht, was ebenfalls zu den zuvor genannten Vorteilen führt, daß eine aufgeräumte Anordnung des Kabels erzielt wird, die eine unproblematische Handhabung des Montagesets garantiert.

Grundsätzlich kann der Deckel in vielfältiger Weise auf dem Kabelträger befestigt sein. Gemäß einer bevorzugten Weiterbildung der Erfindung ist jedoch vorgesehen, daß der Deckel in einer derartigen Orientierung auf dem Kabelträger befestigt ist, die seiner späteren Orientierung in auf das Gehäuse aufgesetztem Zustand zum Verschließen desselben entspricht. Auf diese Weise wird bei einer Automatisierung der Installation der Anschlußdose eine aufwendige Zuführung und Orientierung des Deckels vermieden. Darüber hinaus hat ein für die Automatisierung des Installationsvorgangs verwendeter Roboter alleine schon wegen des auf dem Kabelträger befestigten Deckels einen nur kurzen Weg zum Deckel im Vergleich mit der Situation, daß der Deckel in einem separaten Gebinde geliefert wird.

Gemäß einer bevorzugten Weiterbildung der Erfindung ist ferner vorgesehen, daß das Gehäuse eine Kabeleinführung für das Kabel aufweist, wobei ein Bereich des Kabelträgers unterhalb der Kabeleinführung vorgesehen ist. Daß ein Bereich des Kabelträgers unterhalb der Kabeleinführung vorgesehen ist, bedeutet, daß der Kabelträger im installierten Zustand der Anschlußdose, also z. B. bei seiner Installation auf der Rückseite eines Solarzellenmoduls, Einrichtungen auf der Rückseite des Solarzellenmoduls von der Kabeleinführung mechanisch trennt. Dies kann insbesondere dann vorteilhaft sein, wenn als Kabeleinführung eine Kabelverschraubung vorgesehen ist, da nunmehr eine auf der Rückseite des Solarzellenmoduls vorgesehene Laminatfolie bei der Verwendung eines Schraubenschlüssels für die Kabelverschraubung nicht mehr verletzt werden kann.

Gemäß einer bevorzugten Weiterbildung der Erfindung kann im übrigen vorgesehen sein, daß der Kabelträger eine Zugentlastung für das Kabel aufweist. Dies hat den Vorteil, daß die Kabeleinführung in dem Gehäuse dann nur noch eine Dichtfunktion übernehmen muß, Kabelverschraubungen an dem Gehäuse jedoch entfallen können.

Gemäß einer bevorzugten Weiterbildung der Erfindung ist schließlich vorgesehen, daß eine Mehrzahl von Montagesets in einem Magazin gestapelt wird. In dieser Form sind sie insbesondere bei einer automatisierten Installation einfach und sicher handhabbar.

Im übrigen betrifft die Erfindung auch ein Solarzellenmodul, das eine an dem Solarzellenmodul befestigte und ein Gehäuse aufweisende Anschlußdose aufweist, wobei dem Gehäuse ein Kabel zugeführt ist. Dieses Solarzellenmodul ist erfindungsgemäß dadurch gekennzeichnet, daß ein Kabelträger vorgesehen ist, der an dem Solarzellenmodul befestigt ist und der das Kabel fixiert.

Erfindungsgemäß weist damit nicht nur das zuvor beschriebene Montageset für die Elektrodose einen Kabelträger auf, sondern der Kabelträger wird auch auf dem Solarzellenmodul installiert. Die Vorteile des Kabelträgers, nämlich eine geordnete Handhabung des Kabels, existiert damit nicht nur für das Montageset während dessen Transport und bei der Installation, sondern auch für das fertig vormontierte Solarzellenmodul. Damit kann das fertig vormontierte Solarzellenmodul einfach und sicher transportiert und installiert werden, ohne daß lose herunterhängende Kabel dabei stören.

Dabei kann grundsätzlich vorgesehen sein, daß der Kabelträger mittels des Gehäuses der Anschlußdose am Solarzellenmodul befestigt ist. Gemäß einer bevorzugten Weiterbildung der Erfindung ist jedoch vorgesehen, daß der Kabelträger direkt an dem Solarzellenmodul befestigt ist, vorzugsweise nämlich mit diesem verklebt ist.

Im übrigen kann der Kabelträger direkt am Gehäuse angeordnet sein. Gemäß einer bevorzugten Weiterbildung der Erfindung ist jedoch vorgesehen, daß der Kabelträger auf dem Solarzellenmodul im Abstand zu dem Gehäuse angeordnet ist.

Dies wird insbesondere dadurch erreicht, daß das zur Installation vorgesehene Montageset ein zuvor beschriebenes Verbindungsteil aufweist, das nach der Installation des Gehäuses und des Kabelträgers entfernt wird.

Nachfolgend wird die Erfindung unter Bezugnahme auf die Zeichnung anhand von drei bevorzugten Ausführungsbeispielen weiter erläutert. In der Zeichnung zeigt
- Fig. 1a - f: den Installationsvorgang für ein Montageset gemäß einem ersten bevorzugten Ausführungsbeispiel der Erfindung,
- Fig. 2: ein Montageset gemäß einem zweiten bevorzugten Ausführungsbeispiel der Erfindung in Draufsicht und

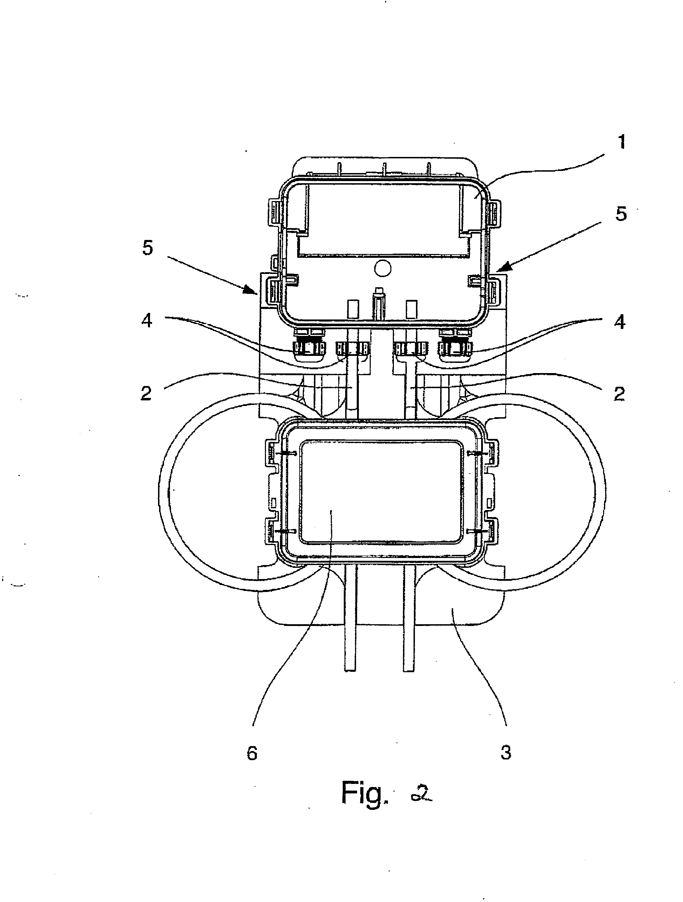

- Fig. 2: ein Montageset gemäß einem dritten bevorzugten Ausführungsbeispiel der Erfindung, ebenfalls in Draufsicht.

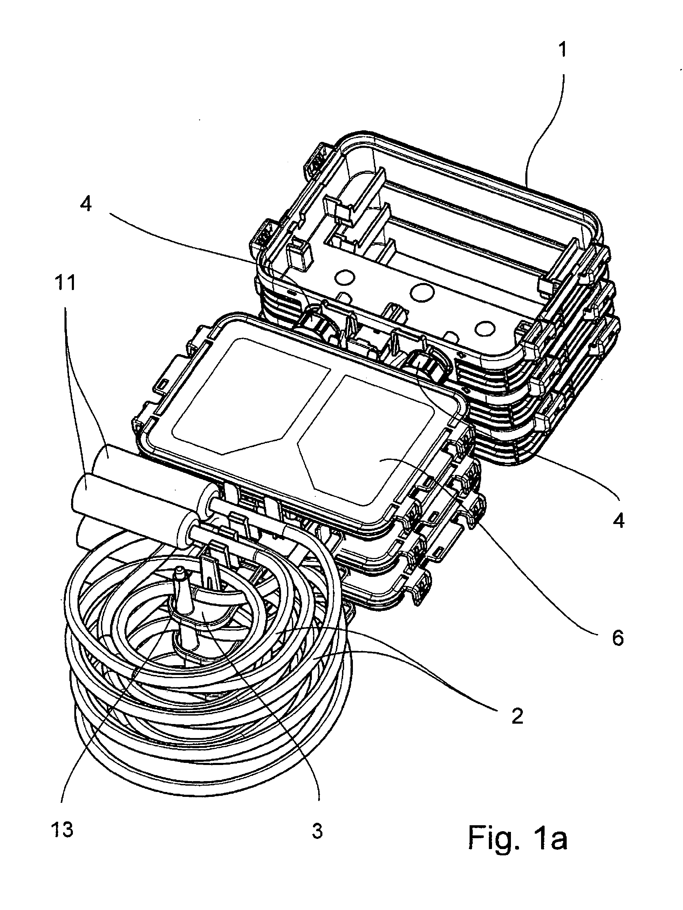

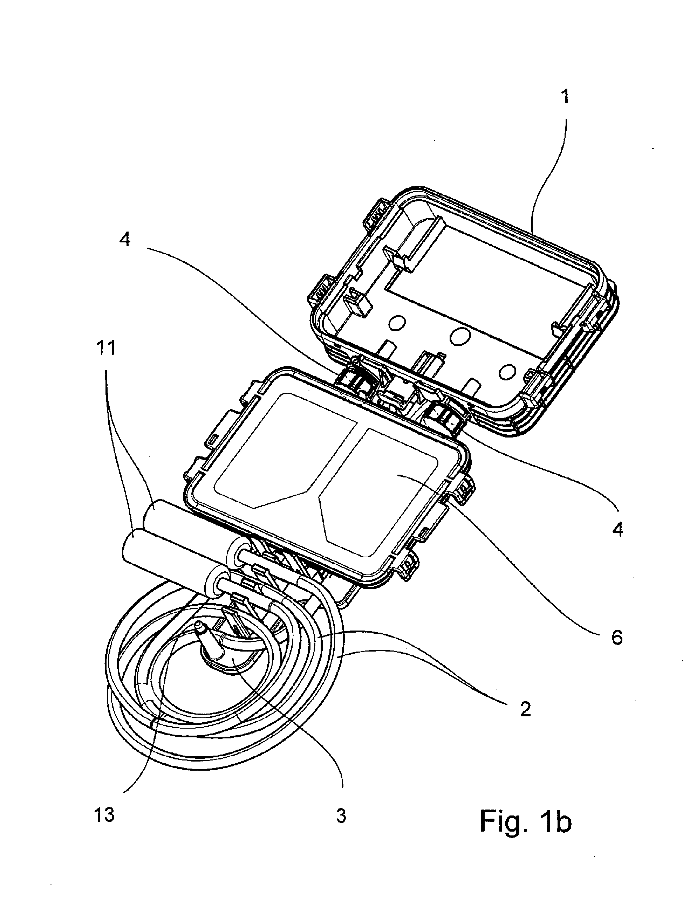

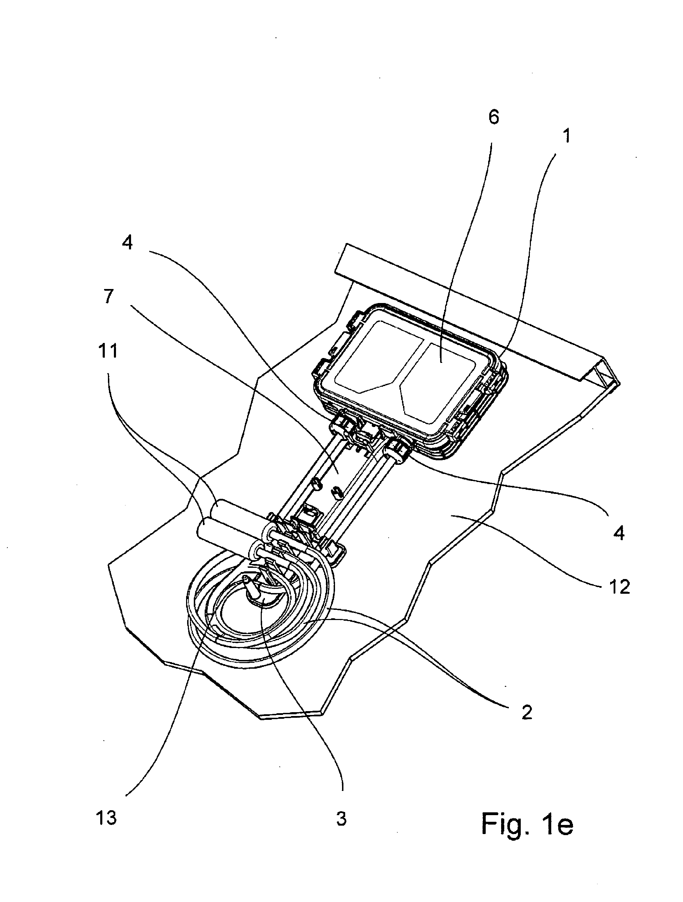

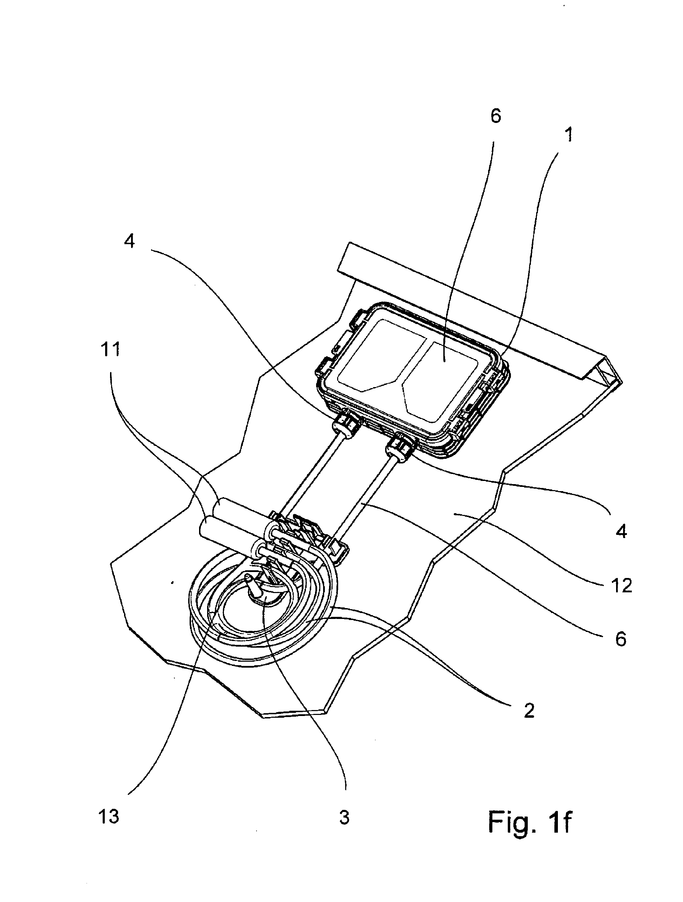

Aus Fig. 1a ist eine Mehrzahl von Montagesets gemäß einem ersten bevorzugten Ausführungsbeispiel der Erfindung ersichtlich, und zwar in gestapelter Form für ein Magazin. Aus diesem können sie in einem automatisierten Vorgang zur Installation auf Solarzellenmodulen entnommen werden. Aus den nachfolgenden Fig. 1b bis 1f ist dann ersichtlich, wie die Installation auf einem Solarzellenmodul durchgeführt wird.

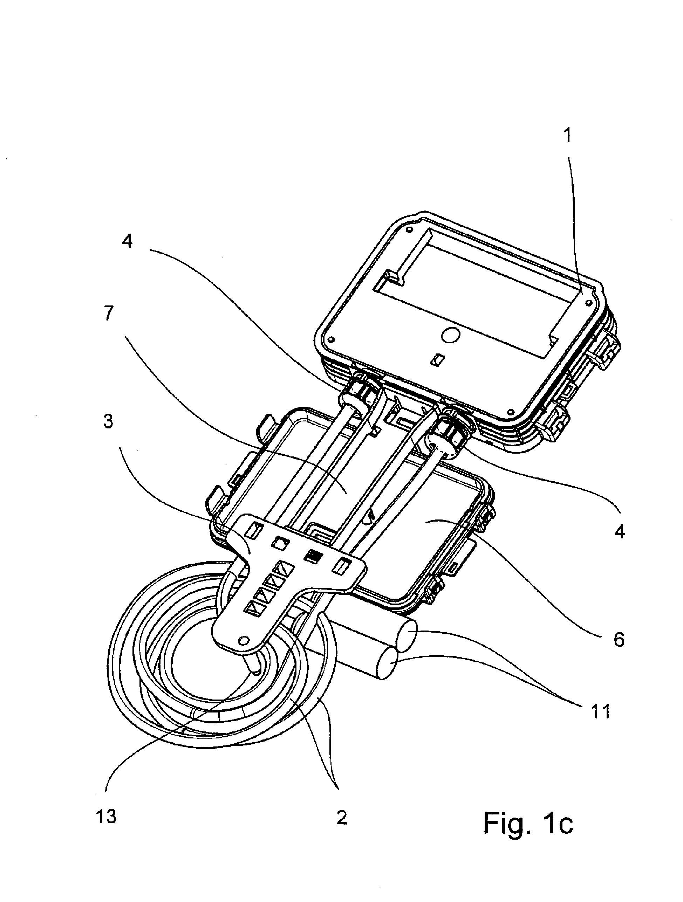

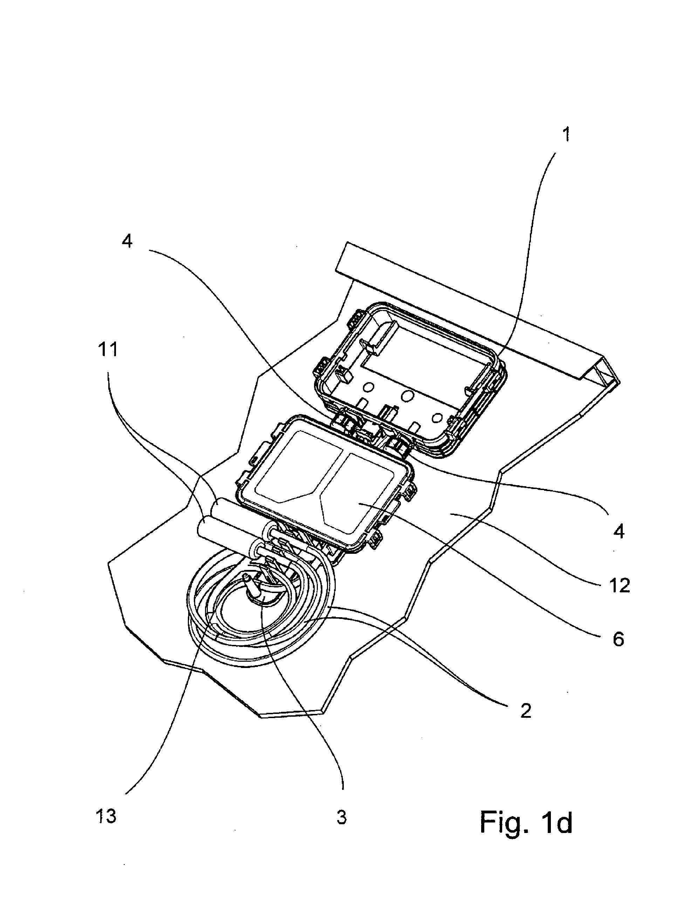

Das in den Fig. 1a bis 1f gezeigte Montageset für eine Anschlußdose gemäß dem ersten bevorzugten Ausführungsbeispiel der Erfindung weist ein Gehäuse 1, zwei Kabel 2 mit jeweils einem Stecker 11 und einen Kabelträger 3 auf. Die Kabel dienen zum Anschluß des aus den Fig. 1d bis 1e ersichtlichen Solarzellenmoduls 12. Das Gehäuse 1 weist Kabeleinführungen 4 auf, über die die Kabel 2 dem Gehäuse 1 zugeführt sind. Der Kabelträger 3 ist als separates Teil ausgebildet und mit dem Gehäuse 1 mittels eines Verbindungsteils 7 verbunden. Oberhalb des Verbindungsteils 7 befindet sich ein Deckel 6 zum Verschließen des Gehäuse 1. Zur Installation der Anschlußdose werden die Montagesets gemäß dem ersten bevorzugten Ausführungsbeispiel der Erfindung in gestapelter Form, wie aus Fig. 1a ersichtlich, angeliefert. Mit dem nicht weiter dargestellten Greifer eines für die automatische Installation verwendeten Roboters werden die einzelnen Montagesets dann an den Außenseiten des Gehäuses 1 sowie an einem Aufnahmezapfen 13 des Kabelträgers 3 aufgenommen. Wie aus Fig. 1c ersichtlich, wird das Montageset gemäß dem ersten bevorzugten Ausführungsbeispiel der Erfindung dann von seiner Rückseite her mit einem Klebemittel versehen, wie mit einem Pfeil angedeutet. Mit dem Solarzellenmodul 12 werden das Gehäuse 1 und der Kabelträger 3 verklebt, nicht jedoch das Verbindungsteil 7.

Aus Fig. 1d ist das Montageset gemäß dem bevorzugten Ausführungsbeispiel der Erfindung in seinem mit dem Solarzellenmodul 12 verklebten Zustand ersichtlich. Dabei ist das Gehäuse 1 noch nicht mittels des Deckels 6 verschlossen, so daß Installationsarbeiten zum elektrischen Anschluß des Solarzellenmoduls durchgeführt werden können. Nachfolgend greift der Roboter dann den Deckel 6, der mittels Verrastungen 14 an dem Verbindungsteil 7 befestigt ist, die sich auf Zug hin lösen lassen. Der Deckel 6 wird auf das Gehäuse 1 aufgesetzt, so daß dieses verschlossen wird.

In einem letzten Arbeitsschritt greift der Roboter das Verbindungsteil 7, das mittels Verrastungen 8, 9 am Gehäuse 1 bzw. am Kabelträger 3 befestigt ist. Auch diese Verrastungen 8, 9 lösen sich auf Zug hin. Im Ergebnis wird damit ein Gehäuse 1 mit Kabeln 2 realisiert, die mittels eines ebenfalls an dem Solarzellenmodul 12 befestigten Kabelträgers 3 in ordentlicher und aufgeräumter Weise gehalten sind. Das auf diese Weise vorinstallierte Solarzellenmodul 12 kann damit einfach und sicher transportiert werden, ohne daß herunterhängende oder lose Kabel dabei stören.

Das aus Fig. 2 ersichtliche Montageset für eine Anschlußdose für ein Solarzellenmodul gemäß dem zweiten bevorzugten Ausführungsbeispiel der Erfindung weist ein Gehäuse 1, zwei Kabel 2 und einen Kabelträger 3 auf. Die Kabel 2 dienen auch hier zum Anschluß eines hier nicht weiter dargestellten Solarzellenmoduls und sind über in dem Gehäuse 1 vorgesehenen Kabeleinführungen 4 in Form von Kabelverschraubungen dem Gehäuse 1 zugeführt. Der Kabelträger 3 ist als separates Teil ausgebildet und mit dem Gehäuse 1 verbunden, indem der Kabelträger 3 von unten her an das Gehäuse 1 angesetzt und mittels Verrastungen 5 gehalten wird.

Die Kabel 2 sind nun derart angeordnet, daß sie von dem Kabelträger 3 getragen werden, wobei ihre mittleren Bereiche jeweils annähernd kreisförmig verlaufen. Damit werden wesentliche Bereiche der Kabel 2 von dem Kabelträger 3 getragen, und die Kabel 2 ragen seitlich in nur geringen Bereichen über den Kabelträger 3 hinaus, ohne daß sie von diesem herunterhängen.

In ihrer Position gehalten werden die Kabel 2 durch einen Deckel 6, der zum späteren Verschließen des Gehäuses 1 dient und bei dem vorliegend beschriebenen Montageset gemäß dem zweiten bevorzugten Ausführungsbeispiel der Erfindung über den Kabeln 2 auf dem Kabelträger 3 angeordnet ist. Auf diese Weise werden die Kabel 2 fixiert, so daß sie sich nicht aus ihrer Position lösen.

Bei der Installation wird nun derart vorgegangen, daß das komplette Montageset zum Ort der Installation gebracht wird, wo ein Aufsetzen des kompletten Montagesets auf das Element erfolgt, auf dem die Installation vorgesehen ist, wie der Rückseite eines Solarzellenmoduls. Nachdem das Montageset aufgesetzt worden ist und gegebenenfalls weitere Anschluß- und Installationsarbeiten innerhalb des Gehäuses erfolgt sind, wird der Deckel 6 von dem Kabelträger 3 abgenommen und zum Verschließen des Gehäuses 1 auf dieses aufgesetzt. Dabei ist der Deckel 6 bereits in einer derartigen Orientierung auf dem Kabelträger 3 vorgesehen, die auch seiner Orientierung auf dem Gehäuse 1 zum Verschließen desselben entspricht, was die Anbringung des Deckels 6, insbesondere bei automatisierter Montage, erheblich erleichtert.

Durch das Abnehmen des Deckels 6 von dem Kabelträger 3 werden die Kabel 2 automatisch frei, da gemäß dem vorliegend beschriebenen bevorzugten zweiten Ausführungsbeispiel der Erfindung keine weitere Fixiereinrichtungen zum Halten der Kabel 2 vorgesehen sind. Die Kabel können also nun ohne weiteres vom Kabelträger 3 gelöst und wie erforderlich montiert werden.

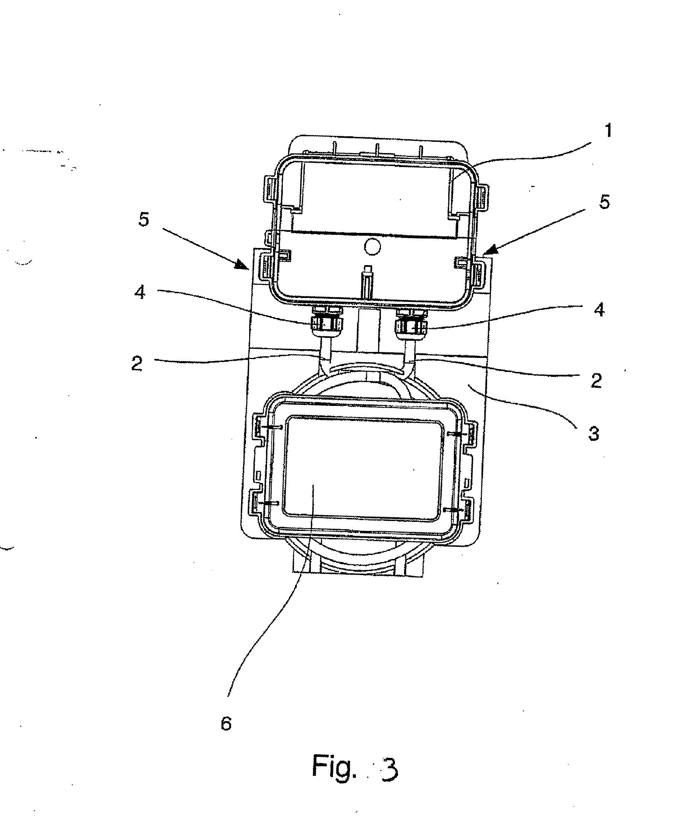

Aus Fig. 3 ist ein Montageset gemäß einem dritten bevorzugten Ausführungsbeispiel der Erfindung ersichtlich, das ebenfalls ein Gehäuse 1, zwei dem Gehäuse 1 zugeführte Kabel 2 und einen an dem Gehäuse 1 angebrachten Kabelträger 3 aufweist. Die Ausgestaltung des Montagesets gemäß dem dritten bevorzugten Ausführungsbeispiel entspricht im wesentlichen der Ausgestaltung des zuvor beschriebenen Montagesets gemäß dem zweiten bevorzugten Ausführungsbeispiel der Erfindung, wobei vorliegend jedoch vorgesehen ist, daß die Kabel 2 in allen ihren Bereichen vom Kabelträger 3 getragen werden. Das bedeutet, daß die Kabel 2 seitlich nicht über den Kabelträger 3 hinausragen, was insbesondere das Vorsehen einer Mehrzahl solcher Montagesets in gestapelter Form innerhalb eines Magazins erleichtert, um dieses Magazin bei der automatisierten Installation mittels eines Roboters zu verwenden.

Schließlich ist bei beiden zuletzt beschriebenen Montagesets gemäß dem zweiten und dem dritten bevorzugten Ausführungsbeispielen der Erfindung vorgesehen, daß ein Bereich der Kabelträger 3 jeweils unter die Kabeleinführungen 4 reicht, die vorliegend als Kabelverschraubungen ausgestaltet sind. Dies bedeutet, daß beim Einsatz eines Schraubenschlüssels für die Kabelverschraubungen unter dem Kabelträger 3 liegende Bereiche, wie die Laminatfolie, die im allgemeinen auf der Rückseite eines Solarzellenmoduls vorgesehen ist, mechanisch geschützt werden.

Insgesamt werden damit Montagesets für eine Elektrodose bereitgestellt, das insbesondere für Anschlußdosen für Solarzellenmodule geeignet ist, wobei das Vorsehen des Deckels 6 auf dem Kabelträger 3 einerseits die Anlieferung des Deckels 6 in einem separaten Gebinde überflüssig macht und darüber hinaus eine einfache und sichere Halterung für die Kabel 2 bereitstellt.

## Patentansprüche

1. Montageset für eine Elektrodose, insbesondere für eine Anschlußdose für ein Solarzellenmodul, mit einem Gehäuse (1), wenigstens einem dem Gehäuse (1) zugeführten Kabel (2) und einem an dem Gehäuse (1) befestigten Kabelträger (3), von dem das Kabel (2) getragen wird, wobei das Montageset einen Deckel (6) zum Verschließen des Gehäuses (1) aufweist, **dadurch gekennzeichnet, dass** der Kabelträger (3) als separates Teil an dem Gehäuse (I) angebracht und von dem Gehäuse (1) lösbar ist.

2. Montageset nach Anspruch 1, **dadurch gekennzeichnet, daß** der Deckel (6) derart angeordnet ist, daß der Innenraum des Gehäuses (1) zugänglich ist.

3. Montageset nach Anspruch 1 oder 2, **dadurch gekennzeichnet, daß** ein Verbindungsteil (7) vorgesehen ist, mit dem der Kabelträger (3) an dem Gehäuse (1) befestigt ist.

4. Montageset nach Anspruch 3, **dadurch gekennzeichnet, daß** das Verbindungsteil (7) mit dem Kabelträger (3) und dem Gehäuse (1) lösbar verbunden ist.

5. Montageset nach Anspruch 4, **dadurch gekennzeichnet, daß** das Verbindungsteil (7) jeweils mittels einer Verrastung (8, 9) am Gehäuse (1) und am Kabelträger (3) befestigt ist.

6. Montageset nach Anspruch 4 oder 5, **dadurch gekennzeichnet, daß** das Verbindungsteil (7) von der mit dem Deckel (6) verschließbaren Seite des Gehäuses (1) her entfernbar ist.

7. Montageset nach einem der Ansprüche 1 bis 6, **dadurch gekennzeichnet, daß** das Kabel (2) mittels einer separaten, an dem Kabelträger vorgesehenen Kabelfixierung (10) fixiert ist

8. Montageset nach einem der Ansprüche 1 bis 6, **dadurch gekennzeichnet, daß** der Deckel (6) derart an dem Kabelträger (3) befestigt ist, daß das Kabel (2) fixiert ist.

9. Montageset nach einem der Ansprüche 1 bis 8, **dadurch gekennzeichnet, daß** der Deckel (6) wenigstens einen Teilbereich des Kabels (2) bedeckt.

10. Montageset nach einem der Ansprüche 1 bis 9, **dadurch gekennzeichnet, daß** an dem Kabel (2) ein Stecker vorgesehen ist und der Deckel (6) wenigstens einen Teilbereich des Steckers, vorzugsweise den gesamten Stecker, bedeckt.

11. Montageset nach einem der Ansprüche 1 bis 10, **dadurch gekennzeichnet, daß** der Kabelträger (3) eine Trageebene zum Tragen des Kabels (2) aufweist und das Kabel (2) derart von dem Kabelträger (3) getragen wird, daß es in allen seinen Bereichen parallel zur Trageebene verläuft.

12. Montageset nach einem der Ansprüche 1 bis 11, **dadurch gekennzeichnet, daß** das Kabel (2) in allen seinen Bereichen von dem Kabelträger (3) getragen wird.

13. Montageset nach einem der Ansprüche 1 bis 12, **dadurch gekennzeichnet, daß** der Deckel (6) in einer derartigen Orientierung auf dem Kabelträger (3) befestigt ist, die seiner späteren Orientierung in auf das Gehäuse (1) aufgesetztem Zustand zum Verschließen desselben entspricht.

14. Montageset nach einem der Ansprüche 1 bis 13, **dadurch gekennzeichnet, daß** der Kabelträger (3) mit dem Gehäuse (1) einstückig ausgebildet ist.

15. Montageset nach Anspruch 1 oder 2, **dadurch gekennzeichnet, daß** das Gehäuse (1) eine Kabeleinführung (4) für das Kabel (2) aufweist und ein Bereich des Kabelträgers (3) unterhalb der Kabeleinführung (4) vorgesehen ist.

16. Montageset nach einem der Ansprüche 1 bis 15, **dadurch gekennzeichnet, daß** der Kabelträger (3) eine Zugentlastung für das Kabel (2) aufweist.

17. Magazin mit einer Mehrzahl von Montagesets nach einem der Ansprüche 1 bis 16, vorzugsweise in gestapelter Form.

18. Solarzellenmodul, mit einer an dem Solarzellenmodul befestigten und ein Gehäuse aufweisenden Anschlußdose, wobei dem Gehäuse (1) ein Kabel (2) zugeführt ist und ein Kabelträger (3) vorgesehen ist, der das Kabel (2) fixiert, **dadurch gekennzeichnet, daß** der Kabelträger (3) als ein von dem Gehäuse (1) separates Teil direkt an dem Solarzellenmodul angebracht ist.

19. Solarzellenmodul nach Anspruch 18, **dadurch gekennzeichnet, daß** der Kabelträger (3) mit dem Solarzellenmodul verklebt ist.

20. Solarzellenmodul nach Anspruch 18 oder 19, **dadurch gekennzeichnet, daß** der Kabelträger (3) im Abstand zu dem Gehäuse (1) angeordnet ist.

## Claims

1. Assembly set for an electrical socket, in particular for a connection socket for a solar cell module, having a housing (1), at least one cable (2) which is fed to the housing (1), and a cable support (3) which is attached to the housing (1) and by which the cable (2) is supported, with the assembly set having a cover (6) for closing the housing (1), **characterized in that** the cable support (3) is mounted on the housing (1) as a separate part and can be detached from the housing (1).

2. Assembly set according to Claim 1, **characterized in that** the cover (6) is arranged in such a way that the interior of the housing (1) is accessible.

3. Assembly set according to Claim 1 or 2, **characterized in that** a connecting part (7) with which the cable support (3) is attached to the housing (1) is provided.

4. Assembly set according to Claim 3, **characterized in that** the connecting part (7) is detachably connected to the cable support (3) and the housing (1).

5. Assembly set according to Claim 4, **characterized in that** the connecting part (7) is attached to the housing (1) and the cable support (3) by means of a latching arrangement in each case.

6. Assembly set according to Claim 4 or 5, **characterized in that** the connecting part (7) can be removed from that side of the housing (1) which can be closed by the cover (6).

7. Assembly set according to one of Claims 1 to 6, **characterized in that** the cable (2) is fixed by means of a separate cable fixing arrangement (10) which is provided on the cable support.

8. Assembly set according to one of Claims 1 to 6, **characterized in that** the cover (6) is attached to the cable support (3) in such a way that the cable (2) is fixed.

9. Assembly set according to one of Claims 1 to 8, **characterized in that** the cover (6) covers at least a subregion of the cable (2).

10. Assembly set according to one of Claims 1 to 9, **characterized in that** a plug is provided on the cable (2), and the cover (6) covers at least a subregion of the plug, preferably the entire plug.

11. Assembly set according to one of Claims 1 to 10, **characterized in that** the cable support (3) has a supporting plane for supporting the cable (2), and the cable (2) is supported by the cable support (3) in such a way that it runs parallel to the supporting plane in all its regions.

12. Assembly set according to one of Claims 1 to 11, **characterized in that** the cable (2) is supported by the cable support (3) in all its regions.

13. Assembly set according to one of Claims 1 to 12, **characterized in that** the cover (6) is attached to the cable support (3) with an orientation which corresponds to its later orientation in the state for closing the housing in which it is mounted on the said housing (1).

14. Assembly set according to one of Claims 1 to 13, **characterized in that** the cable support (3) is integrally formed with the housing (1).

15. Assembly set according to Claim 1 or 2, **characterized in that** the housing (1) has a cable insertion means (4) for the cable (2), and a region of the cable support (3) is provided beneath the cable insertion means (4).

16. Assembly set according to one of Claims 1 to 15, **characterized in that** the cable support (3) has a strain-relief means for the cable (2).

17. Magazine having a plurality of assembly sets according to one of Claims 1 to 16, preferably in stacked form.

18. Solar cell module having a connection socket which is attached to the solar cell module and has a housing, with a cable (2) being supplied to the housing (1) and a cable support (3) which fixes the cable (2) being provided, **characterized in that** the cable support (3) is mounted directly on the solar cell module as a part which is separate from the housing (1).

19. Solar cell module according to Claim 18, **characterized in that** the cable support (3) is adhesively bonded to the solar cell module.

20. Solar cell module according to Claim 18 or 19, **characterized in that** the cable support (3) is arranged at a distance from the housing (1).

## Revendications

1. Ensemble de montage pour une boite électrique, notamment pour une boîte de raccordement destinée à un module de cellules solaires, avec un boîtier (1), avec au moins un câble (2) arrivant au boîtier (1) et avec un support de câble (3) qui est fixé au boîtier (1) et par lequel le câble (2) est porté, l'ensemble de montage comportant un couvercle (6) pour fermer le boîtier (1), **caractérisé en ce que** le support de câble (3) est placé en tant que partie séparée sur le boîtier (1) et qu'il est amovible par rapport au boîtier (1).

2. Ensemble de montage selon la revendication 1, **caractérisé en ce que** le couvercle (6) est agencé de telle sorte que l'espace intérieur du boîtier (1) est accessible.

3. Ensemble de montage selon la revendication 1 ou 2, **caractérisé en ce qu'**il est prévu une partie de liaison (7) avec laquelle le support de câble (3) est fixé au boîtier (1).

4. Ensemble de montage selon la revendication 3, **caractérisé en ce que** la partie de liaison (7) est assemblée, amovible, au support de câble (3) et au boîtier (1).

5. Ensemble de montage selon la revendication 4, **caractérisé en ce que** la partie de liaison (7) est fixée, à chaque fois au moyen d'un système d'encliquetage (8, 9), au boîtier (1) et au support de câble (3).

6. Ensemble de montage selon la revendication 4 ou 5, **caractérisé en ce que** la partie de liaison (7) peut être enlevée à partir de celui des côtés du boîtier (1) qui peut être fermé avec le couvercle (6).

7. Ensemble de montage selon l'une des revendications 1 à 6, **caractérisé en ce que** le câble (2) est fixé au moyen d'une fixation de câble (10) séparée, prévue sur le support de câble.

8. Ensemble de montage selon l'une des revendications 1 à 6, **caractérisé en ce que** le couvercle (6) est fixé au support de câble (3) de telle sorte que le câble (2) est fixé.

9. Ensemble de montage selon l'une des revendications 1 à 8, **caractérisé en ce que** le couvercle (6) recouvre au moins une partie du câble (2).

10. Ensemble de montage selon l'une des revendications 1 à 9, **caractérisé en ce qu'**il est prévu un connecteur sur le câble (2) et **en ce que** le couvercle (6) recouvre au moins une partie du connecteur, de préférence tout le connecteur.

11. Ensemble de montage selon l'une des revendications 1 à 10, **caractérisé en ce que** le support de câble (3) comporte un plan de support pour porter le câble (2) et **en ce que** le câble (2) est porté de telle sorte par le support de câble (3) que toutes ses parties s'étendent parallèlement au plan de support.

12. Ensemble de montage selon l'une des revendications 1 à 11, **caractérisé en ce que** toutes les parties du câble (2) sont portées par le support de câble (3).

13. Ensemble de montage selon l'une des revendications 1 à 12, **caractérisé en ce que** le couvercle (6) est fixé sur le support de câble (3) dans une orientation qui correspond à son orientation ultérieure dans l'état posé sur le boîtier (1) pour la fermeture.

14. Ensemble de montage selon l'une des revendications 1 à 13, **caractérisé en ce que** le support de câble (3) est conçu d'un seul tenant avec le boîtier (1).

15. Ensemble de montage selon la revendication 1 ou 2, **caractérisé en ce que** le boîtier (1) comporte une entrée de câble (4) pour le câble (2) et **en ce qu'**une partie du support de câble (3) est prévue en dessous de l'entrée de câble (4).

16. Ensemble de montage selon l'une des revendications 1 à 15, **caractérisé en ce que** le support de câble (3) comporte une décharge de traction pour le câble (2).

17. Magasin avec une multiplicité d'ensembles de montage selon l'une des revendications 1 à 16, de préférence sous forme empilée.

18. Module de cellules solaires, avec une boite de raccordement fixée au module de cellules solaires et comportant un boîtier, un câble (2) étant amené au boîtier (2) et un support de câble (3) qui fixe le câble (2) étant prévu, **caractérisé en ce que** le support de câble (3) est placé, en tant que partie séparée du boîtier (1), directement sur le module de cellules solaires.

19. Module de cellules solaires selon la revendication 18, **caractérisé en ce que** le support de câble (3) est collé au module de cellules solaires.

20. Module de cellules solaires selon la revendication 18 ou 19, **caractérisé en ce que** le support de câble (3) est agencé à une certaine distance du boîtier (1).
